Europäisches Patentamt

European Patent Office

Office européen des brevets

(11) Publication number: **0 171 919**
**B1**

## (12) EUROPEAN PATENT SPECIFICATION

(45) Date of publication of patent specification: **12.04.89**

(21) Application number: **85304888.2**

(22) Date of filing: **09.07.85**

(51) Int. Cl.⁴: **B 32 B 27/04,** C 09 J 5/00,
C 09 J 3/16, C 08 G 18/16,
C 08 K 9/10, C 08 J 3/24

(54) Process for laminating heat shrinkable films.

(30) Priority: **09.07.84 JP 142081/84**

(43) Date of publication of application:
**19.02.86 Bulletin 86/08**

(45) Publication of the grant of the patent:
**12.04.89 Bulletin 89/15**

(84) Designated Contracting States:
**DE FR GB NL**

(56) References cited:
**EP-A-0 152 102**
**DE-A-1 694 079**
**FR-A-1 522 310**
**GB-A-1 035 903**
**GB-A-1 428 834**
**US-A-4 080 238**

(73) Proprietor: **KUREHA KAGAKU KOGYO
KABUSHIKI KAISHA**
**9-11 Horidome-cho 1-chome Nihonbashi Chuo-
ku**
**Tokyo 103 (JP)**

(72) Inventor: **Yoshii, Junji**
**20-20 Hinode-cho**
**Noda-shi Chiba-ken (JP)**

(74) Representative: **Lawrence, Peter Robin
Broughton et al**
**GILL JENNINGS & EVERY 53-64 Chancery Lane
London WC2A 1HN (GB)**

Courier Press, Leamington Spa, England.

**Description**

In recent years there have been major developments in composite flexible packaging materials, including the provision of heat shrinkable laminated films.

One way of producing a heat shrinkable laminate is by using an adhesive to adhere the films. The lamination may be a dry lamination process in which event the adhesive may be the so-called two-liquid type polyurethane adhesive system. This system comprises a liquid curable polyurethane adhesive formed by blending a liquid polyol or polyester component with a hardening component which comprises a liquid isocyanate component.

Unfortunately the two-liquid type polyurethane adhesive system has a number of disadvantages for laminating heat shrinkable films. One disadvantage is that the adhesive hardens slowly and so it is necessary to provide an ageing step in the production process. Thus after bringing the films together with the adhesive between them it is necessary to age the laminate at an elevated temperature of from 35 to 50°C to permit completion of the hardening. The rate of hardening depends upon the ageing conditions and the ageing conditions influence the adhesive strength between the heat shrinkable films in the laminate. If the adhesive strength is inadequate the laminate may be subject to deficiencies known as tunnelling or delamination.

Another problem is that because of toxicity considerations aliphatic polyurethanes are now replacing aromatic polyurethanes as the adhesive, but aliphatic polyurethanes require even longer for hardening and ageing than aromatic polyurethanes. For instance with aliphatic polyurethanes it may be necessary to age the laminate for three to four days.

In US 4080238, a method for adhering together two steel plates is disclosed. A one-liquid adhesive is applied to one of the plates. The adhesive includes micro-capsules containing an activator for a catalyst also included in the adhesive. The catalyst activator is released on rupturing the microcapsules and gives hardening of the adhesive and adhesion between the two plates.

In the invention a heat shrinkable laminate is made by pressing together between calendar rolls two heat shrinkable films with, between the films, a coating of a curable polyurethane adhesive formed by blending a liquid polyol or polyester component with a liquid isocyanate component and curing the adhesive, and the method is characterised in that the coating of adhesive includes microcapsules that enclose a hardening accelerator and the capsules are ruptured by the pressing between the calendar rolls.

Thus in the invention at least one of the facing surfaces of the films is coated with a mixed solution of the so-called two-liquid type polyurethane adhesive and this adhesive coating may have substantially conventional coating and curing properties, at this stage of the process. However the coating includes microcapsules of a hardening accelerator and these microcapsules are broken by the roll pressure exerted by the laminating rolls to release the hardening accelerator, which then accelerates the hardening. Thus by the invention it is possible to combine relative stability of the two-liquid adhesive, during coating, with very rapid hardening due to the presence of the hardening accelerator.

The two-liquid adhesive may be formed in conventional manner by blending conventional liquid polyol or polyester component with a conventional liquid isocyanate component.

The hardening accelerator may be any material that can be encapsulated in microcapsules and that will beneficially accelerate the hardening of the two-liquid adhesive. Preferably the accelerator is a tin compound for instance, dibutyltin dilaurate, dibutyltin maleate, dioctyltin dilaurate, dioctyltin maleate and dioctyltin isooctylthioglycolate. The capsules preferably have a diameter in the range 3 to 50 μm. They may be made by conventional means, usually coacervation. Examples of suitable materials as the wall membrane of the microcapsules include urethane resin, urea resin, melamine resin, phenol resin, epoxy resin, polyamide resin and gelatin, singly or in combination.

The two-liquid type polyurethane adhesive, formed by blending the two reactive components of the final cured polyurethane, generally has dispersed into it from 0.5 to 5% by weight of the described microcapsules. The composition may contain sufficient solvent, in conventional manner, to render it coatable. The adhesive is generally coated on one only of the facing surfaces that are to be laminated, for instance using a reverse coater, kiss-coater or gravure coater, and after drying the thus coated film by passage through a drying tunnel, the thus dried film is superposed on the uncoated surface of the other heat shrinkable films that is to be laminated. The superposed films are passed through a pair of combining rolls, whereby the microcapsules in the thus coated adhesive agent are broken by the roll pressure to release the accelerator from the microcapsules. The released accelerator contacts directly with the adhesive agent to complete rapidly the hardening of the adhesive agent between the heat shrinkable films. The laminated films may be wound up as a roll and left at room temperature, and so there is no need to age at elevated temperature for prolonged periods.

Examples of heat shrinkable films that may be used in the present invention include single plies of polyvinylidene chloride, nylon and polyethylene (referred hereinafter to as PE) and composite multilayered films comprising polyolefine (referred hereinafter to as PO), polyvinylidene chloride (hereinafter referred to as PVDC), and PO. Preferably the heat shrinkable films are subjected to corona discharge treatment before laminating for improving the adhesive strength.

As a result of the invention it is possible to reduce or eliminate the warm-ageing step and so the process is much quicker and more convenient to perform. The risk of delamination due to insufficient hardening is reduced or eliminated. The risk of uneven adhesive strength due to variations in the ageing conditions and hardening rate is minimised or eliminated. The invention is of particular value when applied to films that are liable to lose their heat shrinkability if they are maintained warm during the ageing step.

The following is an example of the invention and a comparative example.

Microcapsules containing the hardening accelerator were prepared as follows.

A prepolymer of urea-formaldehyde resin was obtained by mixing 300 g urea and 730 g of an aqueous 37% solution of formaldehyde with 3 g triethanolamine and reacting the mixture for 60 minutes at 70°C. A liquid mixture was obtained by mixing 100 g of this prepolymer with 20 g of an aqueous 38% solution of a water-soluble cationic urea resin (brand: Uramine P-1500, trade mark, prepared by Mitsui-Toatsu Co. Ltd.), 100 g of water and 10 g of an aqueous 10% solution of triethanolamine. After adjusting the pH of the liquid mixture to 5.2 by adding an aqueous 10% solution of citric acid, 3 g of an aqueous 10% solution of sodium alkylbenzenesulfonate (Neoperex, trade mark, made by Kao-Atlas Co. Ltd.) was added to the mixture.

The resultant liquid mixture was emulsified in a homogeniser with 1,000 g dibutyl tin dilaurate until the droplet size of the emulsion was in the range 2 to 8 μm diameter.

The aqueous emulsion was gently stirred whilst raising the temperature to 50°C and the pH was adjusted to 2.8 by the addition of aqueous 10% citric acid. After stirring for 1 hour the emulsion was cooled to room temperature and upon continuing stirring for a further 10 hours a slurry of microcapsules was obtained. The slurry was filtered using a membrane filter and the collected microcapsules were washed with water and dried in a hot air drier at 38°C, to provide 210 g powdery microcapsules.

A two-liquid type polyurethane adhesive was formed by blending 10.38 kg of a polyurethane adhesive component (brand LX-63F, made by Dainippon Ink Co. Ltd.) and 0.48 kg of commercial hardening agent (brand: KP-90, made by Dainippon Ink Co. Ltd.) in ethyl acetate, with a solids ratio of 12:1. 56.25 g of the microcapsules, dispersed in ethyl acetate, were added to the two-liquid adhesive to form a uniform dispersion and the concentration of solid matter in the dispersion was adjusted to 25% by weight by the addition of ethyl acetate.

Three different laminates were formed with polyethylene (PE) film 20 μm in thickness, namely laminates with 20 μm PVDC, 25 μm nylon and 25 μm of a composite film comprising, in order, PO/PVDC/PO.

Each of the PVDC, PO/PVDC/PO and nylon films were coated on one surface at a coating speed of 30 to 90 m/min and at a coating amount of 3 g/m² with the thus prepared adhesive agent containing the microcapsules using an ordinary gravure coater, and the thus coated films were dried through a drying tunnel at 60°C at a speed of 60 m/min.

Thereafter, each of the thus treated films was adhered onto a PE film of 600 mm width while using a pair of combining rolls of a dry laminator under a roll pressure of 44.1 to 49.0 Pa (4.5 to 5 kg/m²G) at a nip temperature of 60°C to obtain each of the composite laminated films.

According to microscopical observation of the coated film after drying and before laminating, and of the laminated film after passing through a pair of the combining rolls, the microcapsules containing the hardening accelerator had been completely broken after passing through the pair of combining rolls.

After leaving the thus prepared laminated film (in a state of a rolled film) at room temperature for a predetermined time period, the physical properties thereof were determined and the results are shown in Table 1.

Comparative Example

In the same manner as in Example except for using the adhesive agent not containing the above-mentioned microcapsules containing the hardening accelerator three kinds of laminated films were prepared and after leaving the thus produced laminated films at room temperature for the same time period as in Example, the physical properties thereof were determined. The results are shown also in Table 1.

As will be seen in Table 1, each of the three kinds of laminated film produced while using the microcapsules containing the hardening accelerator in the two-liquid type adhesive agent is superior to each of the three kinds of laminated films produced without using the microcapsules containing the hardening accelerator in view of (1) adhesive strength, (2) heat-shrinking property, (3) not showing any tunnelling phenomenon and (4) not showing any haze phenomenon. The results show the superiority of the process according to the present invention to the conventional process of not using the microcapsules containing the hardening accelerator.

TABLE 1

| Films laminated | PVDC Film and PE film | | Composite film[1] and PE film | | Nylon film and PE film | |
|---|---|---|---|---|---|---|
| Use of microcapsules<br><br>Physical properties | Yes[2] | No[3] | Yes | No | Yes | No |
| (1) Adhesive strength (g/15 mm in width at 25°C after leaving respectively for<br>1 hour<br>5 hours<br>24 hours<br>48 hours | 1500[4]<br>1500[4]<br>1500[4]<br>1500[4] | 100[5]<br>125[5]<br>350[5]<br>1500[4] | 1500[4]<br>1500[4]<br>1500[4]<br>1500[4] | 100[5]<br>130[5]<br>400[5]<br>1500[4] | 1500[4]<br>1500[4]<br>1500[4]<br>1500[4] | 100[5]<br>140[5]<br>400[5]<br>1500[4] |
| (2) Heat shrinkage (%) immersed in boiling water after leaving for 5 hours at 25°C in air | 20/18[6] | delaminated | 21/18 | delaminated | 10/13 | delaminated |
| (3) Tunneling phenomenon after leaving for 24 hours at 25°C in air | None | Yes | None | Yes | None | Yes |
| (4) Haze (%)[7] after leaving for 24 hours at 25°C in air | 5 | 10 | 7 | 15 | 8 | 15 |

Notes to Table 1
[1] Composition of the composite film: a PO film, a PVDC film and a PO film in the order.
[2] Yes means the use of the microcapsules dispersed in the adhesive agent (Example).
[3] No means that the microcapsules were not used (Comparative Example).
[4] The laminated film was broken at the indicated stress.
[5] The laminated film was exfoliated at the indicated stress between dry-laminated surface(s).
[6] A/B means that the longitudinal shrinkage was A% and the transversal shrinkage was B%.
[7] Haze (%) according to ASTM-D-1003-'61.

**Claims**

1. A process in which a heat shrinkable laminate is made by pressing together between calendar rolls two heat shrinkable films with, between films, a coating of a curable polyurethane adhesive formed by blending a liquid polyol or polyester component with a liquid isocyanate component and curing the adhesive, characterised in that the coating of adhesive includes microcapsules that enclose a hardening accelerator and the capsules are ruptured by the pressing between the calendar rolls.

2. A process according to claim 1 in which the amount of microcapsules is from 0.5 to 5% by weight of the polyurethane adhesive.

3. A process according to claim 1 in which the hardening accelerator is dibutyltin dilaurate, dibutyltin maleate, dioctyltin dilaurate, dioctyltin maleate or dioctyltin isooctylthioglycolate.

**Patentansprüche**

1. Verfahren zur Herstellung eines wärmeschrumpfenden Schichtstoffs durch Verpressen von zwei wärmeschrumpfenden Folien mit einer zwischen den Folien befindlichen Schicht aus einem härtbaren Polyurethan-Klebstoff, der durch Vermischen eines flüssigen Polyol-, oder Polyester-Bestandteils mit einem flüssigen Isocyanat-Bestandteil gebildet worden ist, zwischen Kalanderwalzen und Härten des Klebstoffs, dadurch gekennzeichnet, daß die Klebstoffschicht einen Härtungsbeschleuniger enthaltende Mikrokapseln enthält, und die Kapseln durch das Verpressen zwischen den Kalanderwalzen aufgebrochen werden.

2. Verfahren nach Anspruch 1, worin die Menge an Mikrokapseln 0,5 bis 5 Gew.-% des Polyurethan-Klebstoffs beträgt.

3. Verfahren nach Anspruch 1, in welchem als Härtungsbeschleuniger Dibutylzinndilaurat, Dibutylzinnmaleat, Dioctylzinndilaurat, Dioctylzinnmaleat oder Dioctylzinn-Isooctylthioglycolat ist.

**Revendications**

1. Procédé dans lequel un stratifié à retrait thermique est préparé par pressage l'un contre l'autre entre des rouleaux de calendrage, de deux films à retrait thermique avec, entre les films, un revêtement d'un adhésif à base de polyuréthane durcissable préparé par mélange d'un constituant polyol ou polyester liquide avec un constituant isocyanate liquide et durcissage de l'adhésif, caractérisé en ce que le revêtement d'adhésif comprend des microcapsules qui renferment un accélérateur de durcissement et en ce que les capsules sont rompues par pressage entre les rouleaux de calendrage.

2. Procédé selon la revendication 1, dans lequel la quantité de microcapsules est de 0,5 à 5% en poids de l'adhésif à base de polyuréthane.

3. Procédé selon la revendication 1, dans lequel l'accélérateur de durcissement est le dilaurate de dibutylétain, le maléate de dibutylétain, le dilaurate de dioctylétain, le maléate de dioctylétain ou l'isooctylthioglycolate de dioctylétain.